(19) Europäisches Patentamt
European Patent Office
Office européen des brevets

(11) Publication number: **0 651 337 A1**

(12) **EUROPEAN PATENT APPLICATION published in accordance with Art. 158(3) EPC**

(21) Application number: **93914947.2**

(51) Int. Cl.[6]: **G06F 15/70**

(22) Date of filing: **02.07.93**

(86) International application number: **PCT/JP93/00912**

(87) International publication number: **WO 94/01831 (20.01.94 94/03)**

(30) Priority: **03.07.92 JP 198933/92**

(43) Date of publication of application: **03.05.95 Bulletin 95/18**

(84) Designated Contracting States: **DE ES FR GB IT NL SE**

(71) Applicant: **OMRON CORPORATION**
**10, Tsuchido-cho,**
**Hanazono,**
**Ukyo-ku,**
**Kyoto-shi,**
**Kyoto 616 (JP)**

(72) Inventor: **YOTSUI, Genki**
**Omron Corporation,**
**10, Tsuchido-cho,**
**anazono**
**Ukyo-ku,**
**Kyoto-shi,**
**Kyoto 616 (JP)**
Inventor: **ARAO, Masaki, Omron Corporation**
**10, Tsuchido-cho,**
**Hanazono,**
**Ukyo-ku**
**Kyoto-shi,**
**Kyoto 616 (JP)**

(74) Representative: **Kahler, Kurt, Dipl.-Ing.**
**Patentanwälte Kahler, Käck, Fiener & Sturm,**
**Postfach 12 49**
**D-87712 Mindelheim (DE)**

# (54) OBJECT RECOGNIZING METHOD, ITS APPARATUS, AND IMAGE PROCESSING METHOD AND ITS APPARATUS.

(57) The image signals output from a television camera (1) which represent an object are sent to a preprocessing circuit (3), binary coded and blocked (resolution lowering). Then, in a circuit (4), image data in the area to be correlated are extracted from the preprocessed data. The extracted image data are transformed into data of polar coordinates by a polar coordinate transformation circuit (6) which includes a look-up table. Based upon the transformed image data, a gray-level map is formed including diametric patterns for every given angles. This gray-level map is sequentially compared with the diametric pattern in a circuit (7), at the reference angle of a reference image by a fuzzy pattern matching method for every given angles in order to fetch the correlation reference angle which agrees with the reference angle. By a judging circuit (9), the objective image and reference image are processed by the fuzzy pattern matching in the angular relationship where the fiducial angle is equal to the correlation reference angle, thus outputting a signal representing the result of the object recognizing judgment and corresponding to the degree of matching.

EP 0 651 337 A1

*Fig. 1*

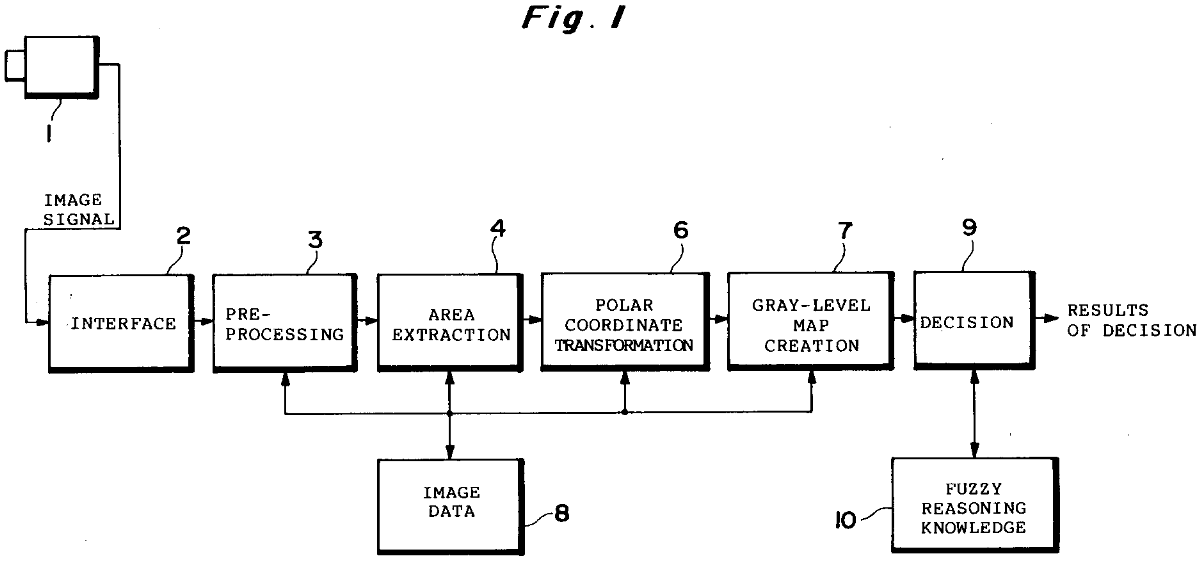
1
IMAGE SIGNAL
2
INTERFACE
3
PRE-PROCESSING
4
AREA EXTRACTION
6
POLAR COORDINATE TRANSFORMATION
7
GRAY-LEVEL MAP CREATION
9
DECISION
RESULTS OF DECISION
IMAGE DATA
8
10
FUZZY REASONING KNOWLEDGE

## Technical Field

This invention relates to a method and apparatus for identifying (or recognizing) objects. More particularly, the invention relates to a method and apparatus for pattern matching in which information representing an object image obtained by image capture is compared with image information representing a reference pattern and degree of agreement or degree of similarity between these items of information is obtained for the purpose of checking fingerprints, recognizing characters or patterns, etc.

The invention further relates to an image processing method and apparatus used for the purpose of the above-mentioned object recognition.

## Background Art

Pattern matching involves creating binary image data by applying binarization processing to image data representing an unknown object of interest, comparing the binary image data and image data representing a reference pattern prepared in advance, calculating degree of agreement between these items of data and judging that an unknown image is identical with the reference pattern in a case where the degree of agreement is high. This makes it possible to check fingerprints, recognizing characters and marks, etc. Template matching also is available as a technique for determining degree of agreement.

In a case where the orientation of an object of interest is stipulated at all times, comparing the image of the object of interest and the reference pattern is comparatively easy. However, in cases where the orientation (angle or direction of placement) has not been stipulated (is unknown), it is required that a large number of reference patterns having a variety of orientations be prepared in advance. If reference patterns are created while shifting the angle thereof 5° at a time, it will be necessary to previously create, and store in memory, 72 reference patterns of differing angles for one single pattern. This not only necessitates a very large memory capacity but also results in a longer processing time attendant upon the increase in the number of reference patterns to be checked.

Even if a large number of reference patterns having different angles are created in advance, the angular position of the object image will not necessarily agree with the angular position of any of the reference patterns prepared. There is the possibility that in case of non-agreement, a judgment to the effect that the object image and a reference pattern differ will be rendered even if they are identical.

In a case where the image of the object of interest is in color, hue data is added onto density (gray level) data. In case of multivalued image data, reference patterns must also be expressed in the form of multivalued data if it is attempted to raise matching precision. Consequently, the problem of greater memory capacity and processing time becomes even more serious.

## Disclosure of the Invention

The present invention seeks to make it sufficient to prepare one reference pattern or only a small number thereof, thereby reducing the necessary memory capacity and raising the speed of image discrimination.

A method of identifying objects according to the present invention comprises imaging an object by an image sensing unit, transforming an object image signal obtained by imaging to an image signal in polar coordinates using, as the origin, a point having a predetermined property in the object image represented by the object image signal, successively collating a diametric pattern of the object image, after its transformation to polar coordinates, at every one of prescribed angles of the object image with a diametric pattern of a reference image at a reference angle of the reference image created and transformed to polar coordinates in advance, thereby finding a collation reference angle of the object image that agrees with the reference angle of the reference image, and mutually collating the object image and the reference image in an angular relationship in which the reference angle and the collation reference angle agree and outputting a signal representing results of an object identification decision in dependence upon degree of agreement.

The image signal referred to here covers not only an analog video signal but also digital image data.

The processing for finding the collation reference angle of the object image and object-identification decision processing is executed on the basis of a feature quantity, such as density (gray level), rate of change thereof, a histogram and a density distribution, etc., extracted from the object image signal.

In a preferred embodiment of the invention, the collation reference angle is found by previously creating a reasoning rule relating to the diametric pattern of the reference image at the reference angle thereof, and successively applying diametric-pattern data in the object image to this reasoning rule (fuzzy pattern matching).

In another preferred embodiment, the method includes creating a gray-level map at each of the prescribed angles from the object image signal, and finding the collation reference angle by the above-mentioned fuzzy pattern matching or another pattern matching method using this gray-level map.

The object-identification decision processing also may be executed using the above-mentioned gray-level map. Furthermore, the collation of the object image and the reference image may be performed by fuzzy pattern matching.

In a preferred embodiment of the invention, the method further includes extracting an area in which collation is to be performed from the object image signal, and performing a transformation to polar coordinates with regard to an image signal contained in the area extracted. As a result, the quantity of image signals dealt with in polar-coordinate transformation processing, in retrieval of collation reference angles following this processing and in collation processing is reduced. This is intended to raise processing speed.

In the extraction of the area in which collation is to be performed, it is especially preferred that the object image signal be converted to a low resolution. This simplifies area extraction processing and raises speed.

The origin for the transformation to polar coordinates is set to be at the center of the area if the area is circular and at a corner of the area if the area is a square. When the origin has been set at the center of a circular area, one reference image is sufficient. When the origin is set at the corner of a square area, four types of reference images are required.

An image processing method according to the present invention comprises transforming given object image data to object image data in polar coordinates using, as the origin, a point having a predetermined property in an object image represented by the object image data, successively collating a diametric pattern of the object image, after its transformation to polar coordinates, at every one of prescribed angles of the object image with a diametric pattern of a reference image at a reference angle of the reference image created and transformed to polar coordinates in advance, thereby finding a collation reference angle of the object image that agrees with the reference angle of the reference image, and mutually collating the object image and the reference image in an angular relationship in which the reference angle and the collation reference angle agree and outputting a signal representing degree of agreement.

The various embodiments of the object identification method apply also to the image processing method.

An object identification apparatus according to the present invention is used in implementing the object identification method described above and comprises an image sensing unit for imaging an object and outputting an object image signal representing the object, a polar-coordinate transformation circuit for transforming the object image signal outputted by the image sensing unit to an object image signal in polar coordinates using, as an origin, a point having a predetermined property in the object image represented by the object image signal, means for successively collating a diametric pattern of the object image, after its transformation to polar coordinates, at every one of prescribed angles of the object image with a diametric pattern of a reference image at a reference angle of the reference image created and transformed to polar coordinates in advance, thereby retrieving a collation reference angle of the object image that agrees with the reference angle of the reference image, and decision means for mutually collating the object image and the reference image in an angular relationship in which the reference angle and the collation reference angle agree and outputting a signal representing results of an object identification decision in dependence upon degree of agreement.

The polar-coordinate transformation circuit preferably includes a read-only memory in which data representing correlation between polar coordinates and rectangular coordinates is stored in advance.

In another preferred embodiment, the retrieval means retrieves the collation reference angle by previously creating a reasoning rule relating to the diametric pattern of the reference image at the reference angle thereof, and successively applying diametric-pattern data in the object image to this reasoning rule (fuzzy pattern matching).

In an embodiment, the decision means performs the collation of the object image and the reference image by fuzzy pattern matching.

In another embodiment, there is further provided area extracting circuit means for extracting an area in which collation is to be performed from the object image signal provided by the image sensing unit. An image signal contained in an area extracted by the area extracting circuit means is applied to the polar-coordinate transformation circuit.

There is further provided preprocessing circuit means for converting the object image signal provided by the image sensing unit to low resolution and applying the image signal, which has been converted to the low resolution, to the area extracting circuit means.

The various embodiments in the object identification method are applicable also to the construction of the object recognition apparatus.

An image processing apparatus according to the present invention is contained in the above-described object identification apparatus and comprises a polar-coordinate transformation circuit for transforming given object image data to object image data in polar coordinates using, as an origin, a point having a predetermined property in the object image represented by the object image data, means for successively collating a diametric pattern of the object image, after its transformation to polar coordinates, at every one of prescribed angles of the object image with a diametric pattern of a reference image at a reference angle of the reference image created and transformed to polar coordinates in advance, thereby retrieving a collation reference angle of the object image that agrees with the reference angle of the reference image, and decision means for mutually collating the object image and the reference image in an angular relationship in which the reference angle and the collation reference angle agree and outputting a signal representing degree of agreement.

In accordance with the object identification method and apparatus of the present invention as well as the image processing method and apparatus, the image of the object of interest is transformed to polar coordinates in each case. The diametric pattern at every prescribed angle constituting the image data after the transformation to polar coordinates is successively compared with the diametric pattern of the reference image at the reference angle thereof and a collation reference angle in the object image that agrees with the reference angle is found. Since the orientation of the object image is thus determined, the object image is collated with the reference image in a state in which the reference angle and collation reference angle are made to coincide, thereby making it possible to discriminate agreement of these patterns. Since the object image and the reference image can be collated in a state in which they are in correct correspondence regardless of the direction in which the object image is oriented, highly accurate pattern matching is possible at all times. Moreover, only one or several items of reference-image data need be provided in advance, and therefore the memory capacity for this purpose can be reduced. Utilizing fuzzy pattern matching makes it possible to perform comparatively simple and high-speed pattern discrimination.

## Brief Description of the Drawings:

Fig. 1 is a block diagram illustrating the electrical construction of an object identification apparatus that includes an image processing apparatus;

Fig. 2a illustrates an example of an image and Fig. 2b illustrates an image obtained by subjecting the image of Fig. 2a to a polar coordinate transformation;

Figs. 3a and 4a each illustrate an example of an image, and Figs. 3b and 4b illustrate images obtained by subjecting the images of Figs. 3a and 4a, respectively, to a polar coordinate transformation;

Fig. 5a shows an example of an image converted to blocks by preprocessing, and Fig. 5b shows an example of a reference image;

Figs. 6a through 6c illustrate a procedure for area extraction processing;

Fig. 7 illustrates a gray-level map of an object image;

Fig. 8 illustrates a gray-level map of a reference pattern;

Fig. 9 shows an example of a membership function;

Fig. 10 illustrates the procedure of decision processing; and

Fig. 11a illustrates another example of an image and Fig. 11b shows an image obtained by subjecting the image of Fig. 11a to a polar coordinate transformation.

## Best Mode for Carrying Out the Invention

Fig. 1 illustrates the overall electrical construction of an object identification apparatus that includes an image processing apparatus.

The object identification apparatus includes an image sensing unit 1 such as an industrial television camera, an interface 2, a preprocessing circuit 3, an area extracting circuit 4, a polar-coordinate transformation circuit 6, a gray-level map creating circuit 7, an image data memory 8, a decision circuit 9, a memory 10 that stores knowledge for fuzzy reasoning, and a controller (not shown) for controlling the operation of the above-mentioned circuits. The controller is constituted by a CPU and its peripheral circuits (a timing generating circuit, etc.). The circuits 3, 4, 6, 7 and 9 preferably are constituted by hardware circuits having special-purpose architecture, in which case a higher processing speed is achieved. Of course, it is possible to construct all or part of these circuits by one or a plurality of CPUs and their peripheral circuits operated in accordance with a program created so as to implement the functions of the circuits. The image data memory 8 stores various image data produced by preprocessing in the preprocessing circuit 3, data relating to an area extracted by the area extracting circuit 4, image data transformed in the polar-coordinate transformation circuit 6 and image data created in the gray-level map creating circuit 7, etc.

A polar coordinate transformation, which is at the core of processing in this object identification apparatus, will now be described.

In Fig. 2a, consideration is given to a case in which a character "A" is contained in a circular area RC for the sake of simplicity. In general, image data obtained from an image sensing unit has its position expressed in an XY coordinate system (rectangular coordinate system). The center O of this image (or area RC) is sensed. An axis is assumed in the diametric direction from the origin O (base line P: this serves as an angular position at which collation starts). In a polar coordinate system, the coordinates are represented by distance r from the center and angle $\theta$ (in the counter-clockwise direction, for example) from the base line P.

Fig. 2b illustrates a transformed image obtained by transforming the character image "A", which is expressed in the rectangular coordinate system, to the polar coordinate system, plotting the distance r in the polar coordinate system along the vertical axis and plotting the angle $\theta$ along the horizontal axis.

Figs. 3a and 4a each illustrate a change in the orientation of the character "A". The images after the polar coordinate transformation are as shown in Figs. 3b and 4b, respectively. The image after the polar coordinate transformation shifts along the horizontal axis (the axis of angle $\theta$), as will be understood if Fig. 2b is compared with Figs. 3b and 4b. This disparity in the orientation of the image in the rectangular coordinate system thus manifests itself as a positional shift on the angle axis in the polar coordinate system. Accordingly, if an angular position that agrees with the base line in the reference image can be found in the object image (the image to be identified), then accurate collation of an image pattern is possible irrespective of the orientation of the image.

With reference again to Fig. 1, the object of interest (the object to be identified) is imaged by the image sensing unit 1, which outputs an image signal representing the object. The image signal is applied to the preprocessing circuit 3 through the interface 2. The preprocessing circuit 3 executes image-signal binarization processing, contraction (e.g., low-pass filtering) and diffusion (e.g., error diffusion) processing, etc. Isolated pixels ascribable to noise are eliminated by the contraction and diffusion processing. The image data obtained by these processing operations is stored in the image memory 8.

The preprocessing circuit 3 further executes what is referred to as resolution lowering processing, averaging processing or block converting processing. This processing divides up all pixels into blocks which contain several pixels each vertically and horizontally and treats each block as a new (larger) pixel. (This is a first block conversion step.) The image data in a block may be binary or multivalued. In a case where binary image data is created, the image data indicative of pixels contained in a block is summed (this image data will be 1 or 0 since it will have been binarized), the image data of the block is made 1 when the value of the sum exceeds a prescribed threshold value and is made 0 at all other times. In case of a multivalued conversion, the above-mentioned value of the sum may be treated intact as the image data of the block, or multivalued data can be created by subjecting the value of the sum to level discrimination using a plurality of different threshold values. Thus, less detailed image data of the object of interest is obtained and this image data is stored in the image memory 8.

The image data converted to blocks by the preprocessing circuit 3 is applied to the area extraction circuit 4 directly or through the image data memory 8. The area extracting circuit 4 cuts an area (which corresponds to the above-mentioned circular area RC) containing an image (the object image) to be subjected to pattern matching processing from the image that has been captured. Though the area to be cut may be square or circular, the image data is expressed in a rectangular coordinate system and, hence, processing is simpler for the square shape. In the polar coordinate system, on the other hand, the circular area is easier to handle. Accordingly, even if the circular area is dealt with in the polar coordinate system as the area in which the object image resides, what is considered in the processing for cutting out the area is a square area whose size is almost the same as that of the circular area.

Fig. 5a illustrates an example of the image data, which has been converted to blocks, applied to the area extracting circuit 4. Fig. 5b illustrates an example of image data representing a reference pattern in pattern matching. An image converted to blocks in this manner is created in advance also for the reference pattern. A number N of blocks in which image data contained in an area corresponding to the area occupied by this reference pattern (and of substantially the same size as this area) is 1 (or 0) (in case of binary image data) is sensed in advance. The image data converted to blocks shown in Fig. 5a is scanned by a mask whose size is that of the above-mentioned area, and the number of blocks for which the image data included within the mask is 1 is enumerated at each position of the mask. If the number of blocks enumerated falls within an allowable range established in the vicinity of the above-mentioned number N, then the area within this mask is extracted.

As shown in Fig. 6a, there are cases in which an area R thus extracted and the area RC in which the reference pattern would actually exist are slightly offset from each other. Accordingly, the area R is enlarged in the vertical and horizontal directions, as shown in Fig. 6b. Here use is made of the high-resolution image data, which prevailed prior to the block conversion processing, stored in the image data memory 8. By removing peripheral regions (e.g., regions where the image data is 0) W exclusive of the object of interest, as shown in Fig. 6c, an area Ra inclusive of the area RC in which the reference is deemed to be present is finally extracted. The image data in block form belonging to the interior of the region Ra is applied to the polar-coordinate transformation circuit 6 directly or through the image data memory 8. The above-described area extraction processing is known as the course-fine method.

The polar-coordinate transformation circuit 6 transforms the coordinates of the image data inside the given area to polar coordinates upon deciding the center of the area or image and uses this center as the origin. The circuit 6 is equipped with a ROM (a look-up table) in which XY coordinates corresponding to distances and angles have been stored. An address for accessing the ROM is represented by the distance r and angle $\theta$, and XY coordinates that have been stored at the location accessed by this address are read out of the ROM. The image data in read XY coordinates becomes image data in r, $\theta$ coordinates, which indicate the address at which these XY coordinates were accessed. This image data is arrayed in the r, $\theta$ coordinate system, as shown in Fig. 2b.

The image data transformed to polar coordinates is applied to the gray-level creating circuit 7, which subjects the input image data to a second block conversion. As depicted in Fig. 7, the radius r and angle $\theta$ directions are marked off at suitable widths (e.g., 5° in the angular direction) to form blocks. The average gray level of the image data belonging to the interior of a block (e.g., the value of the sum or average of the image data) is calculated and the resulting gray level serves as the image data of the block. This is a gray-level map. In Fig. 7, representation is in levels of three stages in order to simplifying the drawing. Divisions in the radial direction shall be referred to as "rows" and divisions in the angular direction as "columns".

The reason for thus dividing up the image data into the extremely coarse second blocks is to find a base line that agrees with the base line of the reference pattern. The processing for finding the base line is executed by performing fuzzy reasoning column by column, as will be described later. Accordingly, the set of image data in each column (an image pattern represented by one column of image data shall be referred to as a "column pattern") has great meaning.

It will suffice to create a column pattern at fixed angular increments (5°, for example). Accordingly, forming the image data into blocks at this fixed angle, as shown in Fig. 7, is only one method that can be used. Another method is to adopt the angular position as the center at fixed angular increments, take a suitable angle (1°, for example) on either side of the center and create column patterns using image data having this suitable angular range. In other words, the angular intervals of the column patterns and the angular range of the image data constituting the column patterns need not coincide.

The decision circuit 9 searches for the base line (the angular position at which collation starts) using the gray-level map obtained in the manner described above, subsequently performs processing for pattern matching between the pattern of the object image and the reference pattern and determines whether the object image is the same as the reference image. The decision circuit 9 preferably is constituted by a CPU and its peripheral circuitry.

First, fuzzy reasoning rules and membership functions that have been stored in the fuzzy-reasoning knowledge memory 10 will be described.

Processing the same as that in the polar-coordinate transformation circuit 6 and gray-level map creating circuit 7 is applied to the image data representing the reference image (this image data may be obtained by imaging performed by the image sensing unit 1), and a gray-level map (a part of which is illustrated in Fig. 8) the same as that shown in Fig. 7 is created. In this embodiment, gray levels having the five stages given below are adopted in order to simplify the description. Though it is not required that the number of stages of the gray levels exhibited by the object image data be the same as the number of stages of the gray levels in the reference pattern, the angular intervals of the columns are identical.

Level is low (density is low)
Level is somewhat low (density is somewhat low)
Level is medium (density is medium)
Level is somewhat high (density is somewhat high)
Level is high (density is high)

A rule is created for each column of gray-level map regarding the reference pattern. For example, in the fourth column of Fig. 8, let the density of the first row be "medium", the density of the second row "somewhat low" and the density of the third row "high". In such case, the rule created for the fourth column is represented as follows:

<u>If</u> the density of the first row is medium
and the density of the second row is somewhat low
and the density of the third row is high
and ···
<u>then</u> this column is the fourth column of the reference pattern.

Such rules are created for all columns constituting the reference pattern and these rules are stored in the fuzzy-reasoning knowledge memory 10. If there is only starting-point sensing processing, then naturally a rule need be created only for the first column (or any other single column) of the reference pattern. Further, a membership function representing the gray level (density) of each stage, as shown in Fig. 9, is created in advance and this also is stored in the fuzzy-reasoning knowledge memory 10.

Fig. 10 illustrates the flow of processing executed by the decision circuit 9. A counter n is provided for counting the columns of the object image pattern (the gray-level map). It will be assumed that up to M columns (e.g., M = 72) are present in the gray-level map of the object image.

The reasoning rule for the first column of the reference pattern is read in from the memory 10 (step 101). The counter n is initialized to 0 (step 102) and then incremented (step 103). The column pattern of the n-th column of the object image is applied to the fuzzy reasoning rule that has been read in, and the degree of membership with respect to this rule is obtained (step 104). The most common approach can be employed for this fuzzy reasoning processing.

If the obtained degree of membership in the rule exceeds a prescribed threshold value, it is judged that the n-th column of the object image agrees with the first column of the reference pattern and, hence, that the n-th column is the collation starting column (YES at step 105).

In a case where the obtained degree of membership in the rule is equal to or less than the prescribed threshold value (NO at step 105), the counter n is incremented (step 103) and fuzzy reasoning regarding the next column pattern carried out again. When a NO answer is obtained at step 105 for all of the column patterns (step 106), it is judged that the object image is not one which agrees with the reference pattern and an output to this effect is produced (step 111).

When it is judged that the n-th column of the object image is the collation starting column, the column pattern of the (n+1)-th column of the object image is applied to the reasoning rule regarding the (1+i)-th column of the reference pattern and fuzzy reasoning is executed with regard to all i (i = 1 ~ M-1) (step 107). When (n+1) surpasses M, however, a return is effected to 1. That is, (n+1-M) is the result. Consequently, degrees of membership relating to all fuzzy rules of M rows are obtained.

Definite values are computed with regard to the M-number of degrees of membership thus obtained (step 108) and the results of the definite-value computation are used to judge whether the object image is the same as the reference pattern (steps 109, 110). There are various ways to compute definite values. For example, an average value of all degrees of membership is computed and, if the average value exceeds the prescribed threshold value, it is judged that the object image agrees with the reference pattern. Otherwise, it is judged that the object image does not agree with the reference pattern. Further, if the minimum value of all degrees of membership exceeds a prescribed threshold value, it is judged that the object image agrees with the reference pattern. Otherwise, it is judged that the object image does not agree with the reference pattern.

After the position of a column (the collation starting column) in the object image that agrees with the first column of the reference pattern has been found, it can also be judged whether the object image is identical with the reference pattern by an ordinary pattern matching technique rather than by fuzzy-reasoning pattern matching. In such case it would suffice to execute collation processing upon shifting the data of the object image in the angular direction so as to make the collation starting column of the object image agree with the first column of the reference pattern. In this collation processing, the data of the object image transformed to polar coordinates having a higher resolution and reference pattern data corresponding to this data can be collated without relying upon the gray-level maps.

Thus, the image data of the object image and the image data of the reference image are both transformed to polar coordinates and pattern collation is carried out after retrieval of the mutually coincident angles. As a result, by preparing only one reference image, correct collation processing can be executed irrespective of the direction in which the object image is oriented.

It is possible that a decision indicative of non-agreement will be rendered at step 109 in the foregoing processing owing to the fact that the correlation starting position decided at step 105 is erroneous. In order to preclude such an erroneous decision, an arrangement may be adopted in which fuzzy reasoning relating to the rule of the first column of the reference pattern is carried out with regard to all column patterns of the object image. The column pattern for which the highest degree of membership is generated among the degrees of membership obtained as the result of fuzzy reasoning is judged to be the collation starting column that agrees with the first column of the reference pattern. Alternatively, an arrangement may be adopted in which, when a NO answer is obtained at step 109, the program returns to step 103, as long as $n > M$ does not hold, so that fuzzy reasoning (step 104) will be executed with regard to column patterns for which fuzzy reasoning for the purpose of finding the collation starting column has not been executed.

In the foregoing embodiment, an example has been described in which the gray-level information (inclusive of position information) of the blocks in each pattern is mapped as a feature quantity. However, this does not impose a limitation upon the invention. An arrangement may be adopted in which a map is created in relation to other parameters that characterize patterns, such as the rate of change in the gray level, histogram information, the state of distribution of gray levels or the shape of a set thereof, etc., with discrimination processing being executed on the basis of the map.

In the fuzzy pattern matching processing of step 107, an arrangement can be adopted in which a fuzzy reasoning rule is created with regard to each row of the reference pattern, the row patterns of the object image are applied to the corresponding rules and the degree of membership is obtained row by row.

In order to retrieve the collation starting column of the object image, the rule regarding the first column of the reference pattern is used in the foregoing embodiment. However, it goes without saying that a reasoning rule regarding another column can be used. In particular, by using a reasoning rule regarding a column which best expresses the feature of the reference pattern, it is possible to achieve a reduction in the possibility that an error will occur in the retrieval of the starting column, as well as an increase in the speed of processing.

In the foregoing embodiment, the object image or the area which contains it is circular and a transformation to polar coordinates is made using the center of the image or area as the origin. However, the object image or the area containing it may be square and the origin for the purpose of the transformation to polar coordinates may be one corner rather than the center. For example, the polar-coordinate transformation can also be carried out using one corner P of a square area as the origin, as illustrated in Fig. 11a. Fig. 11b illustrates the image obtained by the transformation to polar coordinates. The angular range is $0 \sim 90°$. Accordingly, it is necessary to prepare four types of patterns, in which the transformation to polar coordinates is performed using four corners as origins, as the reference patterns, and it is necessary to perform pattern matching between the object image transformed to polar coordinates and the four types of reference patterns. Even in this case, however, a reduction in memory capacity and an increase in processing speed can be achieved in comparison with the prior-art pattern matching method.

The method and apparatus according to the present invention can be used not only in verification of individuals and character recognition but also in the inspection and management of manufactured articles. Furthermore, a copier, printer or image scanner, etc., can be provided with the apparatus according to the present invention. In such case, decision processing to determine whether a prescribed mark is contained in image data, which has been read in, can be executed at the same time that the processing for reading in the object image is carried out, and printing or copying can be made to stop when the prescribed mark is detected. This is useful in preventing the counterfeiting of bank notes using a copier.

**Claims**

**1.** A method of identifying objects comprising the steps of:

imaging an object by an image sensing unit;

transforming an object image signal obtained by imaging to an image signal in polar coordinates using, as the origin, a point having a predetermined property in the object image represented by the object image signal;

successively collating a diametric pattern of the object image, after its transformation to polar coordinates, at every one of prescribed angles of the object image with a diametric pattern of a reference image at a reference angle of the reference image created and transformed to polar coordinates in advance, thereby finding a collation reference angle of the object image that agrees with the reference angle of the reference image; and

mutually collating the object image and the reference image in an angular relationship in which the reference angle and the collation reference angle agree and outputting a signal representing results of an object identification decision in dependence upon degree of agreement.

**2.** A method of identifying objects according to claim 1, wherein processing for finding the collation reference angle of the object image and object-identification decision processing is executed on the basis of a feature quantity extracted from the object image signal.

**3.** A method of identifying objects according to claim 1, wherein the collation reference angle is found by previously creating a reasoning rule relating to the diametric pattern of the reference image at the reference angle thereof, and successively applying diametric-pattern data in the object image to this reasoning rule.

**4.** A method of identifying objects according to claim 1, further comprising the steps of creating a gray-level map at each of said prescribed angles from the object image signal, and finding the collation reference angle using this gray-level map.

**5.** A method of identifying objects according to claim 4, wherein object-identification decision processing is executed using said gray-level map.

**6.** A method of identifying objects according to claim 1, wherein the collation of the object image and the reference image is performed by fuzzy pattern matching.

**7.** A method of identifying objects according to claim 1, further comprising the steps of extracting an area in which collation is to be performed from the object image signal, and performing a transformation to polar coordinates with regard to an image signal contained in the area extracted.

**8.** A method of identifying objects according to claim 7, wherein the object image signal is lowered in resolution in the extracting of the area in which collation is to be performed.

**9.** A method of identifying objects according to claim 7, wherein the origin for the transformation to polar coordinates is the center of a circular area.

**10.** A method of identifying objects according to claim 7, wherein the origin for the transformation to polar coordinates is a corner of a square area.

**11.** An image processing method comprising the steps of:

transforming given object image data to object image data in polar coordinates using, as the origin, a point having a predetermined property in an object image represented by the object image data;

successively collating a diametric pattern of the object image, after its transformation to polar coordinates, at every one of prescribed angles of the object image with a diametric pattern of a reference image at a reference angle of the reference image created and transformed to polar coordinates in advance, thereby finding a collation reference angle of the object image that agrees with the reference angle of the reference image; and

mutually collating the object image and the reference image in an angular relationship in which the reference angle and the collation reference angle agree and outputting a signal representing degree of agreement.

**12.** An image processing method according to claim 11, wherein the processing for finding the collation reference angle of the object image and object-identification decision processing is executed on the basis of a feature quantity extracted from the object image data.

**13.** An image processing method according to claim 11, wherein the collation reference angle is found by previously creating a reasoning rule relating to the diametric pattern of the reference image at the reference angle thereof, and successively applying diametric-pattern data in the object image to this reasoning rule.

**14.** An image processing method according to claim 11, further comprising the steps of creating a gray-level map at each of said prescribed angles from the object image data, and finding the collation reference angle using this gray-level map.

**15.** An image processing method according to claim 14, wherein object-identification decision processing is executed using said gray-level map.

**16.** An image processing method according to claim 11, wherein the collation of the object image and the reference image is performed by fuzzy pattern matching.

**17.** An image processing method according to claim 11, further comprising the steps of extracting an area in which collation is to be performed from the object image data, and performing a transformation to polar coordinates with regard to an image data contained in the area extracted.

**18.** An image processing method according to claim 17, wherein the object image data is lowered in resolution in the extracting of the area in which collation is to be performed.

**19.** An image processing method according to claim 17, wherein the origin for the transformation to polar coordinates is the center of a circular area.

**20.** An image processing method according to claim 17, wherein the origin for the transformation to polar coordinates is a corner of a square area.

**21.** An object identification apparatus comprising;

an image sensing unit for imaging an object and outputting an object image signal representing the object;

a polar-coordinate transformation circuit for transforming the object image signal outputted by the image sensing unit to an object image signal in polar coordinates using, as an origin, a point having a predetermined property in the object image represented by the object image signal;

means for successively collating a diametric pattern of the object image, after its transformation to polar coordinates, at every one of prescribed angles of the object image with a diametric pattern of a reference image at a reference angle of the reference image created and transformed to polar coordinates in advance, thereby retrieving a collation reference angle of the object image that agrees with the reference angle of the reference image; and

decision means for mutually collating the object image and the reference image in an angular relationship in which the reference angle and the collation reference angle agree and outputting a signal representing results of an object identification decision in dependence upon degree of agreement.

**22.** An object identification apparatus according to claim 21, wherein said polar-coordinate transformation circuit includes a read-only memory in which data representing correlation between polar coordinates and rectangular coordinates is stored in advance.

**23.** An object identification apparatus according to claim 21, wherein said retrieval means retrieves the collation reference angle by previously creating a reasoning rule relating to the diametric pattern of the reference image at the reference angle thereof, and successively applying diametric-pattern data in the object image to this reasoning rule.

**24.** An object identification apparatus according to claim 21, wherein said decision means performs the collation of the object image and the reference image by fuzzy pattern matching.

**25.** An object identification apparatus according to claim 21, further comprising area extracting circuit means for extracting an area in which collation is to be performed from the object image signal provided by said image sensing unit, wherein an image signal contained in an area extracted by said area extracting circuit means is applied to said polar-coordinate transformation circuit.

**26.** An object identification apparatus according to claim 25, further comprising preprocessing circuit means for lowering in resolution the object image signal provided by the image sensing unit and applying the image signal of lowered resolution to said area extracting circuit means.

**27.** An object identification apparatus according to claim 25, wherein the origin for the transformation to polar coordinates in said polar-coordinate transformation circuit is the center of a circular area.

**28.** An object identification apparatus according to claim 25, wherein the origin for the transformation to polar coordinates in said polar-coordinate transformation circuit is a corner of a square area.

**29.** An image processing apparatus comprising:

a polar-coordinate transformation circuit for transforming given object image data to object image data in polar coordinates using, as an origin, a point having a predetermined property in the object image represented by the object image data;

means for successively collating a diametric pattern of the object image, after its transformation to polar coordinates, at every one of prescribed angles of the object image with a diametric pattern of a reference image at a reference angle of the reference image created and transformed to polar coordinates in advance, thereby retrieving a collation reference angle of the object image that agrees with the reference angle of the reference image; and

decision means for mutually collating the object image and the reference image in an angular relationship in which the reference angle and the collation reference angle agree and outputting a signal representing degree of agreement.

**30.** An image processing apparatus according to claim 29, wherein said polar-coordinate transformation circuit includes a read-only memory in which data representing correlation between polar coordinates and rectangular coordinates is stored in advance.

**31.** An image processing apparatus according to claim 29, wherein said retrieval means retrieves the collation reference angle by previously creating a reasoning rule relating to the diametric pattern of the reference image at the reference angle thereof, and successively applying diametric-pattern data in the object image to this reasoning rule.

**32.** An image processing apparatus according to claim 29, wherein said decision means performs the collation of the object image and the reference image by fuzzy pattern matching.

**33.** An image processing apparatus according to claim 29, further comprising area extracting circuit means for extracting an area in which collation is to be performed from given object image data, wherein image data contained in an area extracted by said area extracting circuit means is applied to said polar-coordinate transformation circuit.

**34.** An image processing apparatus according to claim 33, further comprising preprocessing circuit means for lowering in resolution the given object image data and applying the image data of lowered resolution to said area extracting circuit means.

**35.** An image processing apparatus according to claim 33, wherein the origin for the transformation to polar coordinates in said polar-coordinate transformation circuit is the center of a circular area.

**36.** An image processing apparatus according to claim 33, wherein the origin for the transformation to polar coordinates in said polar-coordinate transformation circuit is a corner of a square area.

Fig. 1

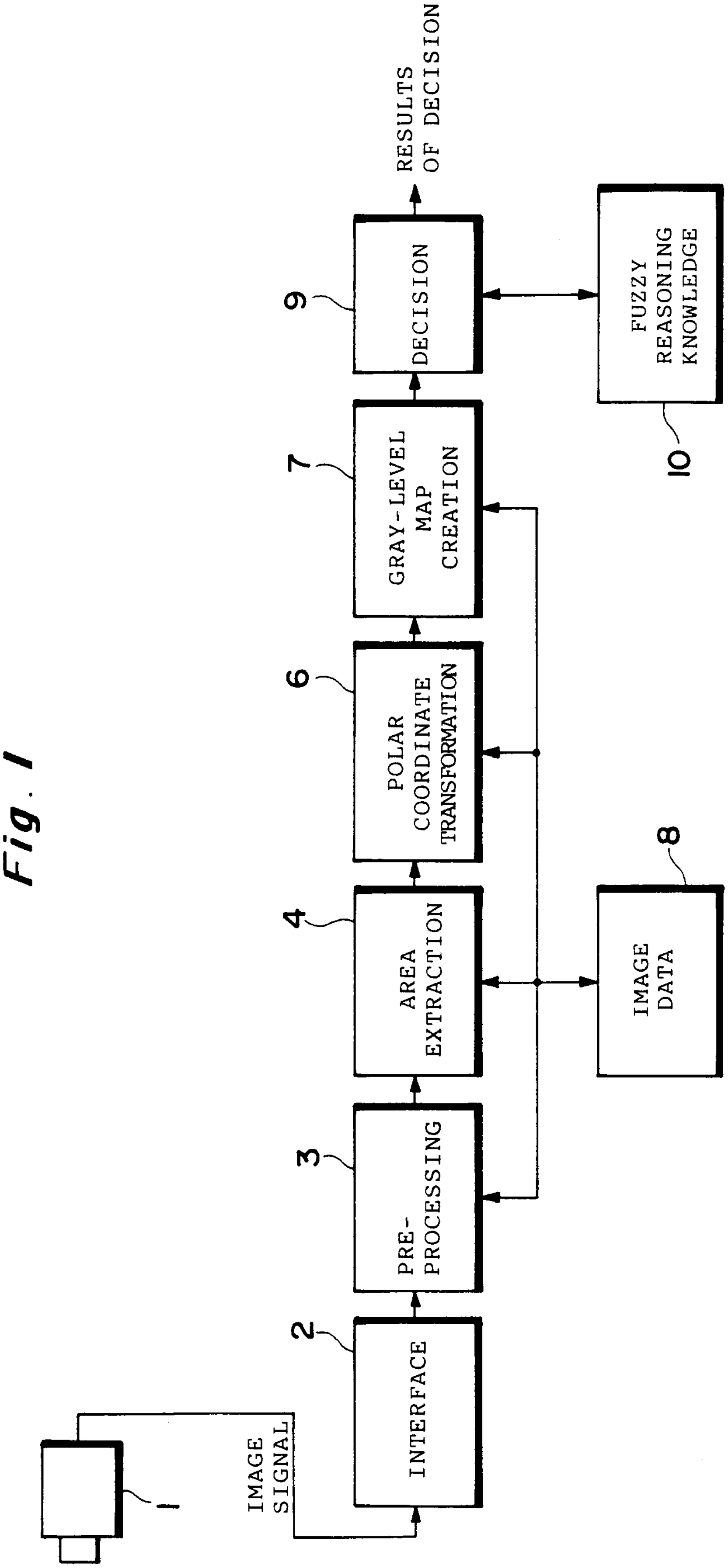
1
IMAGE SIGNAL
INTERFACE
2
PRE-PROCESSING
3
AREA EXTRACTION
4
POLAR COORDINATE TRANSFORMATION
6
GRAY-LEVEL MAP CREATION
7
DECISION
9
RESULTS OF DECISION
IMAGE DATA
8
FUZZY REASONING KNOWLEDGE
10

Fig. 2a

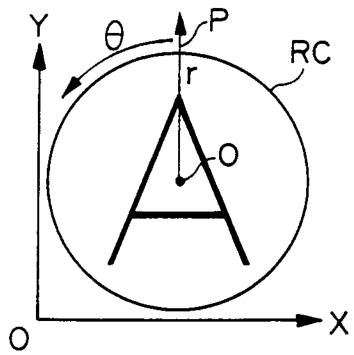


Fig. 2b

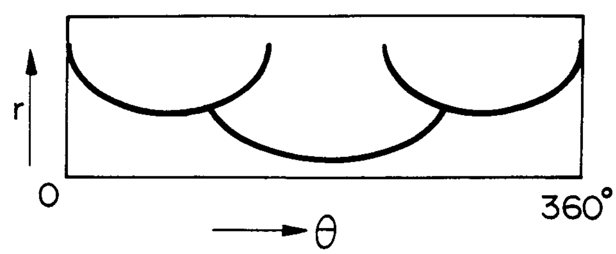


Fig. 3a

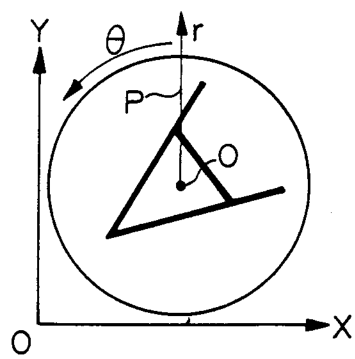


Fig. 3b

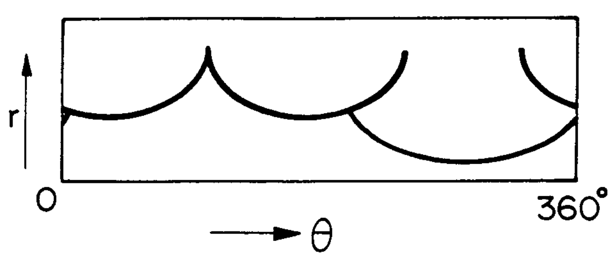


Fig. 4a

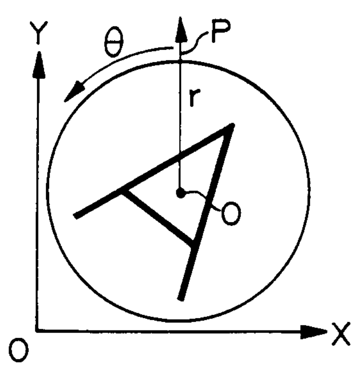


Fig. 4b

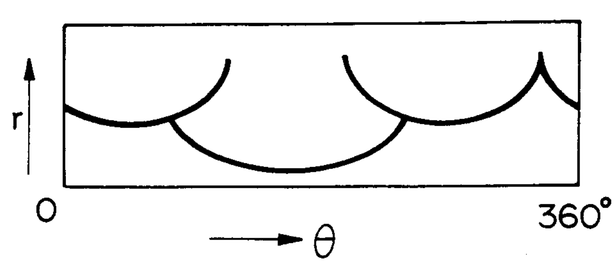

*Fig. 5a*

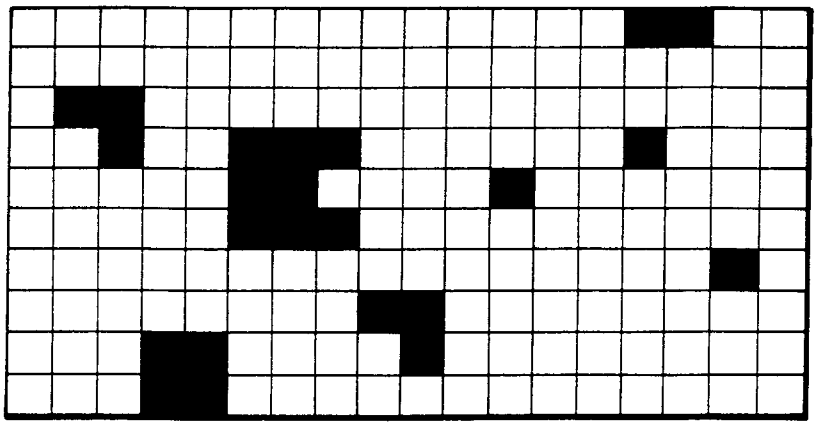

*Fig. 5b*

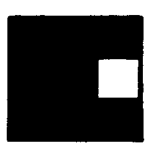

*Fig.6a*

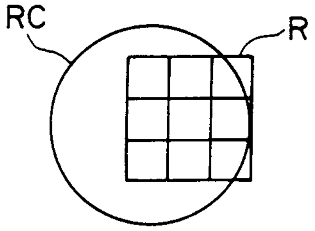


*Fig.6b*

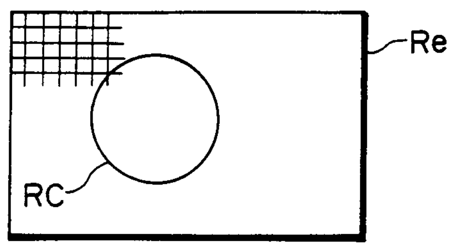


*Fig.6c*

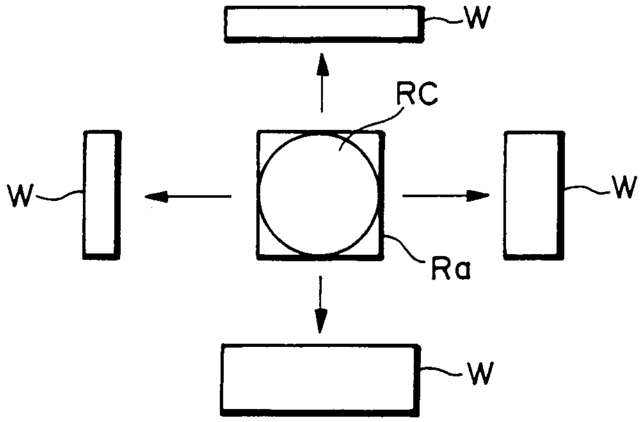

Fig. 7

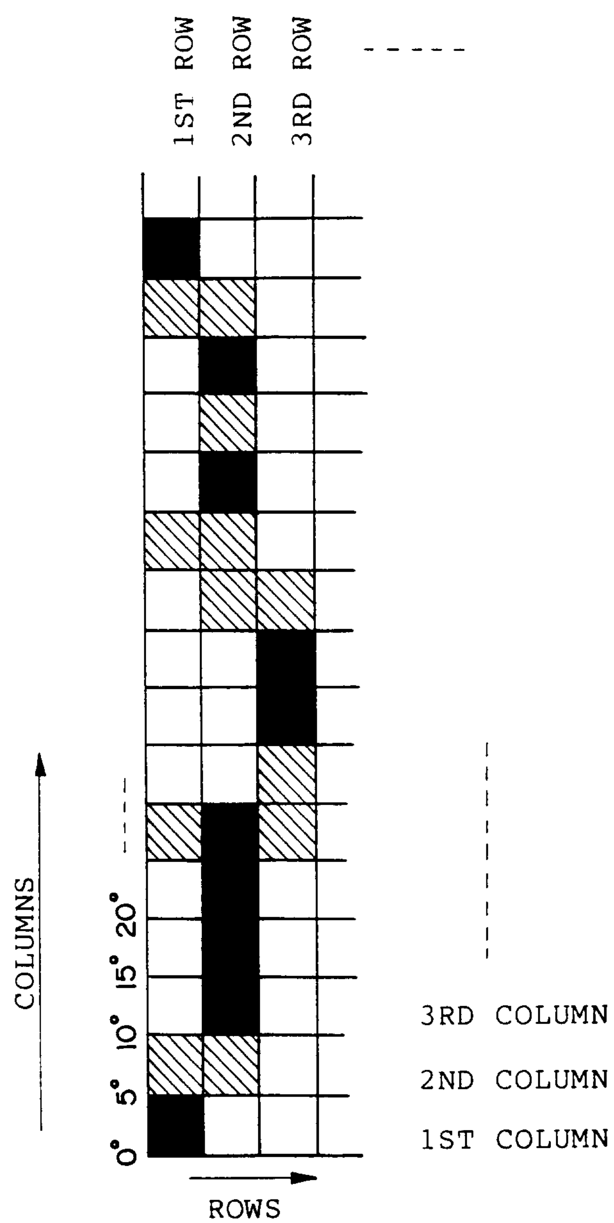
1ST ROW
2ND ROW
3RD ROW
COLUMNS
0° 5° 10° 15° 20°
3RD COLUMN
2ND COLUMN
1ST COLUMN
ROWS

Fig. 8

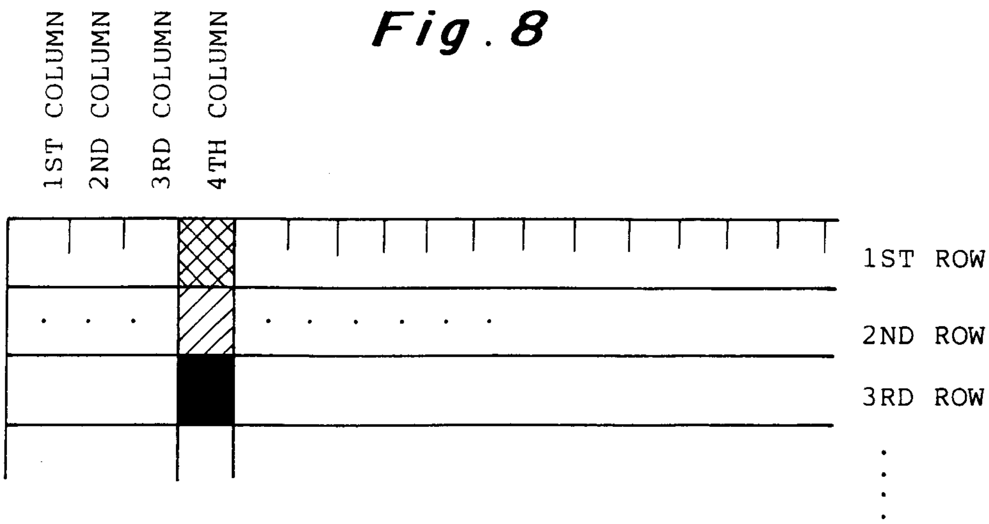
1ST COLUMN
2ND COLUMN
3RD COLUMN
4TH COLUMN
1ST ROW
2ND ROW
3RD ROW

Fig. 9

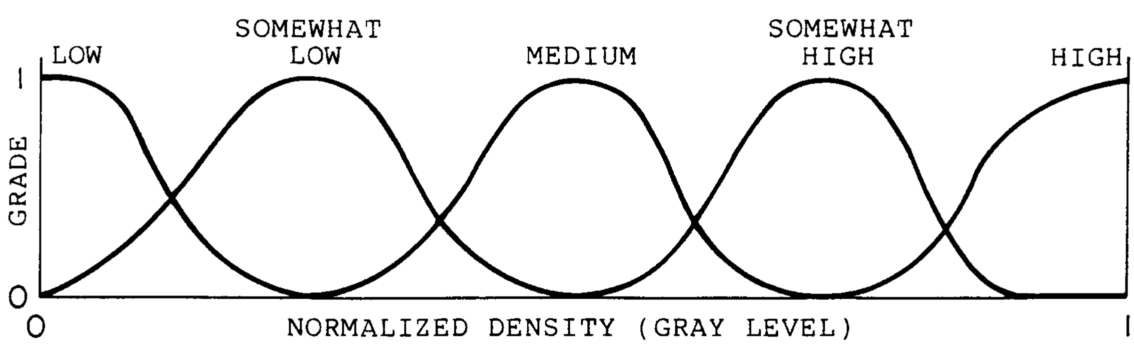
LOW
SOMEWHAT LOW
MEDIUM
SOMEWHAT HIGH
HIGH
1
GRADE
0
0
NORMALIZED DENSITY (GRAY LEVEL)
1

*Fig. 10*

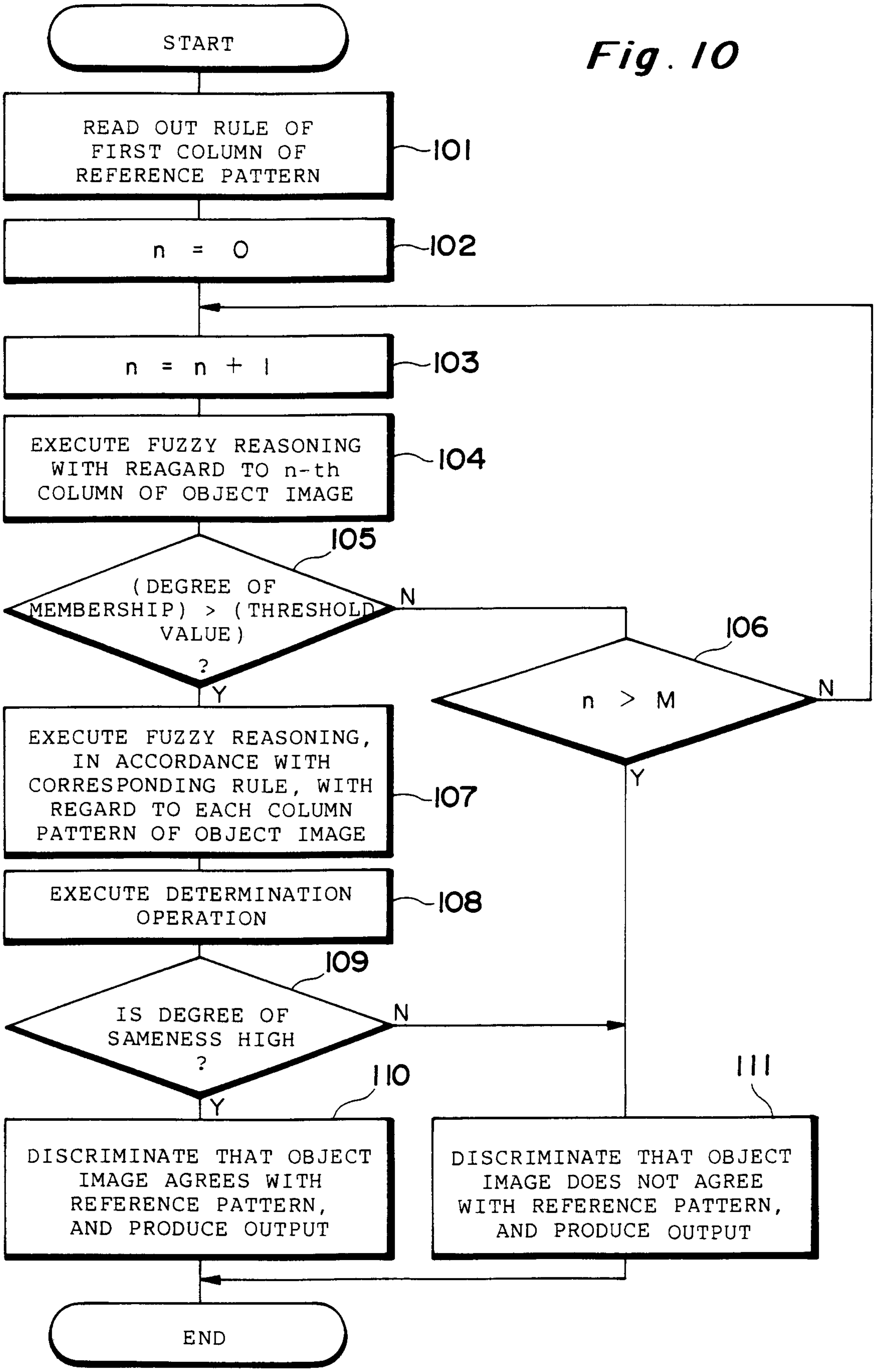
START
READ OUT RULE OF FIRST COLUMN OF REFERENCE PATTERN
101
n = 0
102
n = n + 1
103
EXECUTE FUZZY REASONING WITH REAGARD TO n-th COLUMN OF OBJECT IMAGE
104
105
(DEGREE OF MEMBERSHIP) > (THRESHOLD VALUE) ?
N
Y
106
n > M
N
Y
EXECUTE FUZZY REASONING, IN ACCORDANCE WITH CORRESPONDING RULE, WITH REGARD TO EACH COLUMN PATTERN OF OBJECT IMAGE
107
EXECUTE DETERMINATION OPERATION
108
109
IS DEGREE OF SAMENESS HIGH ?
N
Y
110
111
DISCRIMINATE THAT OBJECT IMAGE AGREES WITH REFERENCE PATTERN, AND PRODUCE OUTPUT
DISCRIMINATE THAT OBJECT IMAGE DOES NOT AGREE WITH REFERENCE PATTERN, AND PRODUCE OUTPUT
END

Fig. 11a

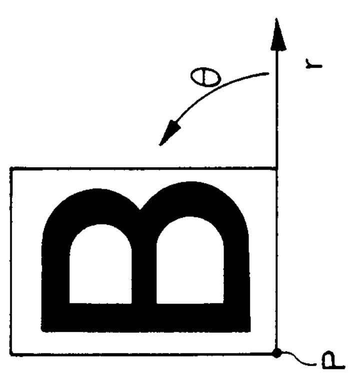


Fig. 11b

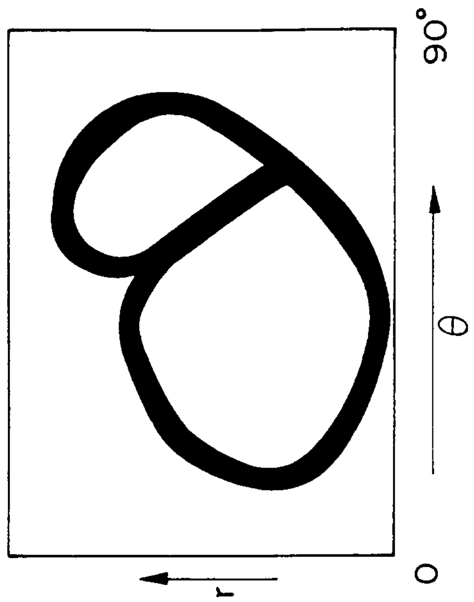

## INTERNATIONAL SEARCH REPORT

International application No.
PCT/JP93/00912

**A. CLASSIFICATION OF SUBJECT MATTER**

Int. $Cl^5$ G06F15/70

According to International Patent Classification (IPC) or to both national classification and IPC

**B. FIELDS SEARCHED**

Minimum documentation searched (classification system followed by classification symbols)

Int. $Cl^5$ G06F15/70, G06F15/62, G06K9/62

Documentation searched other than minimum documentation to the extent that such documents are included in the fields searched

Jitsuyo Shinan Koho 1926 - 1992
Kokai Jitsuyo Shinan Koho 1971 - 1992

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, B2, 51-027973 (Hitachi, Ltd.), August 16, 1976 (16. 08. 76), Lines 19 to 25, column 4 (Family: none) | 1, 10, 25 |
| Y | Fig. 4 | 7, 17, 21, 29 |
| X | JP, A, 3-067377 (Omron Corp.), March 22, 1991 (22. 03. 91), Line 5, lower left column to line 3, lower right column (Family: none) | 6, 16, 24, 32 |
| Y | JP, B2, 2-041794 (Hitachi, Ltd.), September 19, 1990 (19. 09. 90), Lines 8 to 18, column 1 (Family: none) | 8, 18, 26, 34 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| September 14, 1993 (14. 09. 93) | October 5, 1993 (05. 10. 93) |
| Name and mailing address of the ISA/ Japanese Patent Office | Authorized officer |
| Facsimile No. | Telephone No. |